# EUROPEAN PATENT APPLICATION

(11) **EP 3 076 282 A1**
(43) Date of publication of application: **05.10.2016**
(21) Application number: 14876033.3
(22) Date of filing: 22.12.2014
(51) Int. Cl.: G06F 3/06

(54) **METHOD AND DEVICE FOR WRITING DATA IN STORAGE MEDIUM**

(30) Priority: 30.12.2013 CN 201310753266
(71) Applicant: Huawei Technologies Co., Ltd., Longgang District Shenzhen, Guangdong 518129 (CN)
(72) Inventor: XU, Ronggang, Shenzhen Guangdong 518129 (CN); XU, Jun, Shenzhen Guangdong 518129 (CN); YANG, Wei, Shenzhen Guangdong 518129 (CN)
(74) Representative: Maiwald Patentanwalts GmbH
(86) International application number: PCT/CN2014/094486
(87) International publication number: WO 2015/101188

(57) **Abstract**

The present invention relates to a method and apparatus for writing data to a storage medium, where the method for writing data to a storage medium includes: writing data to a storage unit of a storage medium according to a write cycle of the storage medium, where the storage unit is a read/write unit of the storage medium; after write operations are concurrently executed on n storage units in a first write cycle, counting a quantity k of storage units in which writing succeeds among the n storage units in the first write cycle; and starting, in a second write cycle, write operations on subsequent data whose data amount is m storage units in addition to performing write operations on n-k storage units in which writing is not successful. Statistics about a case in which writing to storage units in the first write cycle succeeds are collected, and when write operations on the k storage units are completed in the first write cycle, write operations on m subsequent storage units are started in the second write cycle, which can improve efficiency in writing data to the storage medium.

## Description

This application claims priority to Chinese Patent Application No. 201310753266.9, filed with the Chinese Patent Office on December 30, 2013 and entitled "METHOD AND APPARATUS FOR WRITING DATA TO STORAGE MEDIUM", which is incorporated herein by reference in its entirety.

### TECHNICAL FIELD

The present invention relates to the field of data storage, and in particular, to a method and apparatus for writing data to a storage medium.

### BACKGROUND

In a process of writing data to a storage medium, because of an individual difference between storage units of the storage medium, writing to all storage units may not succeed by performing one write operation, and writing to some storage units can succeed only when multiple write operations are repeatedly performed.

Currently, data is generally written to a storage medium in batches. Generally, write-enable control is performed on all storage units of a batch. It is determined whether all bits (bits) of the storage units of this batch are successfully written. If there is an unsuccessfully written bit, write-enable control needs to be maintained for this batch. Write-enable control can be started on a storage unit of a next batch to perform a write operation on the next batch only after writing to all the storage units of this batch succeeds.

Because quantities of times required for successful writing to different storage units are different, which depends on an individual difference between the storage units, data writing efficiency in the foregoing manner of batch writing is relatively low.

### SUMMARY

In view of this, the present invention provides a method and apparatus for writing data to a storage medium, to resolve a problem of relatively low data writing efficiency caused by a relatively large individual difference in a process of writing data to a storage medium.

To resolve the foregoing technical problem, according to a first aspect, the present invention provides a method for writing data to a storage medium, including:
writing data to a storage unit of a storage medium according to a write cycle of the storage medium, where the storage unit is a read/write unit of the storage medium;
after write operations are concurrently executed on n storage units in a first write cycle, counting a quantity k of storage units in which writing succeeds among the n storage units in the first write cycle, where n is an integer greater than or equal to 2, n is greater than k, and k is an integer greater than or equal to 1; and
starting, in a second write cycle, write operations on subsequent data whose data amount is m storage units in addition to performing write operations on n, k storage units in which writing is not successful, where m is an integer greater than or equal to 1, and the second write cycle is a write cycle that is subsequent to the first write cycle and adjacent to the first write cycle.

With reference to the first aspect, in a first possible implementation manner, m is less than or equal to k.

With reference to the first aspect, in a second possible implementation manner, m is less than or equal to N-(n-k), N is a maximum quantity of concurrent executions, and represents a maximum quantity of storage units the storage medium allows write operations to be concurrently executed in each write cycle, n-k is a quantity of storage units in which writing is not successful in the first write cycle, n is less than or equal to N, and k is less than or equal to N-(n-k).

With reference to the first aspect and either one of the first possible implementation manner and the second possible implementation manner of the first aspect, in a third possible implementation manner, total write power consumption of the write operations on the data whose data amount is m storage units is less than or equal to total write power consumption of write operations on the k storage units in which writing succeeds in the first write cycle.

To resolve the foregoing technical problem, according to a second aspect, the present invention provides an apparatus for writing data to a storage medium, including:
a data writing unit, configured to write data to a storage unit of a storage medium according to a write cycle of the storage medium, where the storage unit is a read/write unit of the storage medium;
a counting unit, configured to count a quantity k of storage units in which writing succeeds among the n storage units in the first write cycle, where n is an integer greater than or equal to 2, n is greater than k, and k is an integer greater than or equal to 1; and
a starting unit, connected to the counting unit and configured to: in a second write cycle, enable the data writing unit to perform write operations on subsequent data whose data amount is m storage units in addition to performing write operations on n-k storage units in which writing is not successful, where m is an integer greater than or equal to 1, and the second write cycle is a write cycle that is subsequent to the first write cycle and adjacent to the first write cycle.

With reference to the second aspect, in a first possible implementation manner, m is less than or equal to k.

With reference to the second aspect, in a second possible implementation manner, m is less than or equal to N-(n-k), N is a maximum quantity of concurrent executions, and represents a maximum quantity of storage units the storage medium allows write operations to be concurrently executed in each write cycle, n-k is a quantity of storage units in which writing is not successful in the first write cycle, n is less than or equal to N, and k is less than or equal to N-(n-k).

With reference to the second aspect and either one of the first possible implementation manner and the second possible implementation manner of the second aspect, in a third possible implementation manner, total write power consumption of the write operations on the data whose data amount is m storage units is less than or equal to total write power consumption of write operations on the k storage units in which writing succeeds in the first write cycle.

The number of storage units written successfully among n (n is greater than or equal to 2, and n is an integer) storage units in a first write cycle is counted, and when a result of the counting indicates that write operations are completed in k (k is greater than or equal to 1, and k is an integer) storage units in the first write cycle, in a second write cycle, write operations are further started on m (m is greater than or equal to 1, and m is an integer) subsequent storage units in addition to performing write operations on n-k storage units in which writing is not successful in the first cycle. Therefore, a writing data capability in the second write cycle can be utilized, to effectively improve efficiency in writing data to a storage medium.

Exemplary embodiments are described in detail with reference to following accompanying drawings to make other features and aspects of the present invention clearer.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 shows a flowchart of a method for writing data to a storage medium according to Embodiment 1 of the present invention;
FIG. 2 shows a schematic diagram of a process of writing data to a storage medium in batches;
FIG. 3 shows a schematic diagram of a process of writing data to a storage medium according to the method provided in Embodiment 1 of the present invention;
FIG. 4 shows a flowchart of a method for writing data to a storage medium according to Embodiment 2 of the present invention;
FIG. 5 shows a flowchart of a method for writing data to a storage medium according to Embodiment 3 of the present invention;
FIG. 6 shows a flowchart of a method for writing data to a storage medium according to Embodiment 4 of the present invention;
FIG. 7 shows a flowchart of a method for writing data to a storage medium according to Embodiment 5 of the present invention;
FIG. 8 shows a flowchart of a method for writing data to a storage medium according to Embodiment 6 of the present invention;
FIG. 9 shows a sequence diagram of writing data to a storage medium in two stages in batches;
FIG. 10 shows a sequence diagram of writing data to a storage medium in two stages according to the method provided in Embodiment 6 of the present invention;
FIG. 11 shows a structural block diagram of an apparatus for writing data to a storage medium according to Embodiment 7 of the present invention;
FIG. 12 shows a structural block diagram of an apparatus for writing data to a storage medium according to Embodiment 8 of the present invention;
FIG. 13 shows a structural block diagram of an apparatus for writing data to a storage medium according to Embodiment 9 of the present invention; and
FIG. 14 shows a structural block diagram of an apparatus for writing data to a storage medium according to Embodiment 10 of the present invention.

### DESCRIPTION OF EMBODIMENTS

The following describes various exemplary embodiments, features, and aspects of the present invention in detail with reference to accompanying drawings. Same reference numerals in the accompanying drawings designate elements that have same or similar functions. Various aspects of the embodiments illustrated in the accompanying drawings may not be necessarily drawn to scale, unless otherwise specified.

The word "exemplary" specially used herein indicates "used as an example or embodiment, or illustrative". Any embodiment that is described as an exemplary embodiment should not be construed to be preferred over or better than another embodiment.

In addition, multiple specific details are set forth in the following specific implementation manners in order to better describe the present invention. However, a person skilled in the art should understand that the present invention may be practiced without some specific details. In some other instances, methods, means, elements, and circuits well known to a person skilled in the art are not described in detail so as to highlight the subject matter of the present invention.

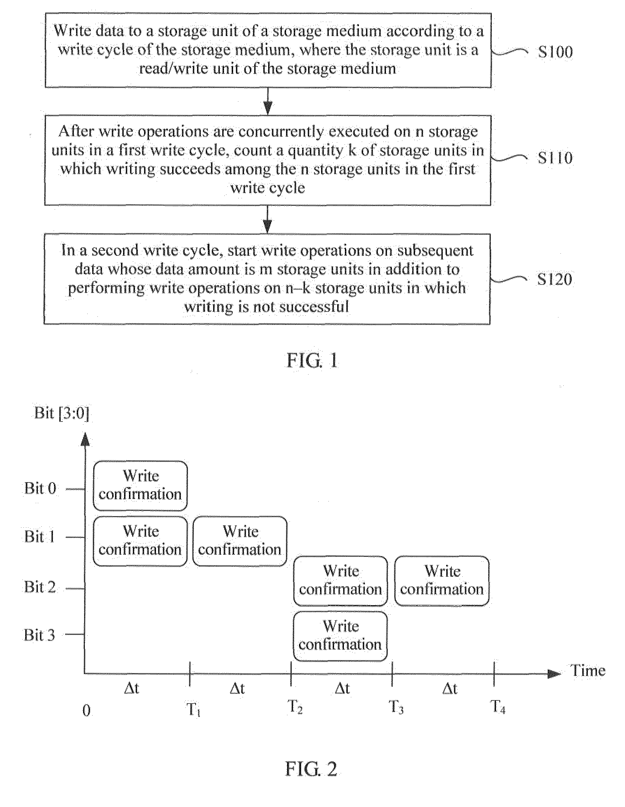

FIG. 1 shows a flowchart of a method for writing data to a storage medium according to Embodiment 1 of the present invention. As shown in FIG. 1, the method for writing data to a storage medium mainly includes:
S100. Write data to a storage unit of the storage medium according to a write cycle of the storage medium, where the storage unit is a read/write unit of the storage medium.
S110. After write operations are concurrently executed on n storage units in a first write cycle, counting a quantity k of storage units in which writing succeeds among the n storage units in the first write cycle, where n is an integer greater than or equal to 2, n is greater than k, and k is an integer greater than or equal to 1.
S120. In a second write cycle, start write operations on subsequent data whose data amount is m storage units in addition to performing write operations on n-k storage units in which writing is not successful, where m is an integer greater than or equal to 1, and the second write cycle is a write cycle that is subsequent to the first write cycle and adjacent to the first write cycle.

In the specification, the term "storage unit" reefers to a read/write unit of a storage medium to which data is written. Specifically, the storage unit may refer to a unit such as a bit (bit, bit), a byte (byte), or a bank (bank) of the written data. With the development of technologies, another read/write unit of data may also be included in the interpretation scope of the "storage unit" described in the present invention.

The number of storage units written successfully in the first write cycle is counted. When writing to the k storage units succeeds in the first write cycle, write operations on m subsequent storage units are started in the second write cycle, which can improve efficiency in writing data to the storage medium.

It should be noted that the foregoing storage medium includes but is not limited to a phase change memory (Phase Change Memory, PCM), a multivalue phase change memory, and a resistive random access memory (Resistive Random Access Memory, RRAM). In addition, content of data written to the storage unit in the first write cycle may be different from content of data written to the storage unit in the second write cycle. For example, if data written to the storage unit in the first write cycle is 1, data written to the storage unit in the second write cycle may be 0; if data written to the storage unit in the first write cycle is 0, data written to the storage unit in the second write cycle may be 1.

For example, data of one bit (bit) is separately written to four storage units of the storage medium, and it is assumed that in each write cycle, the storage medium allows write operations to be concurrently executed on a maximum of two storage units.

When data is written in batches in the prior art, as shown in FIG. 2, in a write cycle 0-T1, data of a first bit (that is, a bit 0) is written to a first storage unit, and data of a second bit (that is, a bit 1) is written to a second storage unit. Writing to the first storage unit can succeed by performing only one write operation, and writing to the second storage unit can succeed by performing two write operations. Therefore, when the write cycle 0-T1 ends, writing to the first storage unit succeeds, and in a write cycle T1-T2, a write operation on the second storage unit continues. When the write cycle T1-T2 ends, writing to the second storage unit succeeds.

In a write cycle T2-T3, data of a third bit (that is, a bit 2) is written to a third storage unit, and data of a fourth bit (that is, a bit 3) is written to a fourth storage unit. Writing to the fourth storage unit can succeed by performing only one write operation, and writing to the third storage unit can succeed by performing two write operations. Therefore, when the write cycle T2-T3 ends, writing to the fourth storage unit succeeds, and when a write cycle T3-T4 ends, writing to the third storage unit succeeds. It can be learned that writing the foregoing data in batches consumes four write cycles.

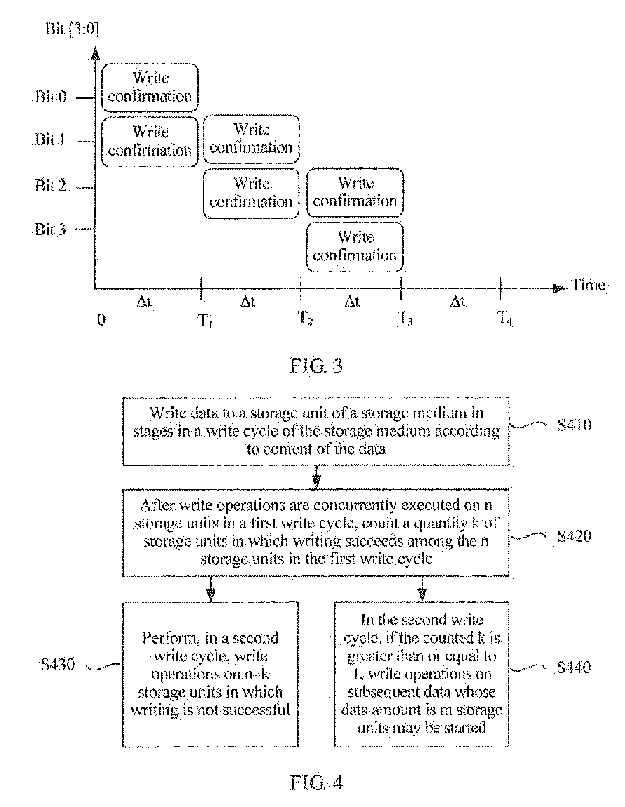

When data is written according to the method in this embodiment, as shown in FIG. 3, similarly, in a write cycle 0-T1, data of a first bit (that is, a bit 0) is written to a first storage unit, and data of a second bit (that is, a bit 1) is written to a second storage unit. When the write cycle 0-T1 ends, writing to the first storage unit succeeds, and in a write cycle T1-T2, a write operation on the second storage unit continues, and a write operation on a third storage unit is started so as to write data of a third bit (that is, a bit 2) to the third storage unit. When the write cycle T1-T2 ends, writing to the second storage unit succeeds.

In a write cycle T2-T3, a write operation on the third storage unit continues, and a write operation on a fourth storage unit is started so as to write data of a fourth bit (that is, a bit 3) to the fourth storage unit. So far, two write operations have been performed on the third storage unit, and one write operation has been performed, on the fourth storage unit. Therefore, when the write cycle T2-T3 ends, writing to both the third storage unit and the fourth storage unit succeeds. It can be learned that writing the foregoing data according to the method in this embodiment consumes three write cycles.

In conclusion, compared with the manner of writing data in batches, the present patent improves efficiency in writing data to the storage medium, and ensures that writing to all storage units succeed.

FIG. 4 shows a flowchart of a method for writing data to a storage medium according to Embodiment 2 of the present invention. As shown in FIG. 4, the method for writing data to a storage medium mainly includes:
S410. Write data to a storage unit of a storage medium in stages in a write cycle of the storage medium according to content of the data.
   Specifically, a write 0 operation and a write 1 operation are used as an example. If a time for the write 0 operation is shorter and a write current of the write 1 operation is weaker, the data is written to the storage medium in two stages. In a first stage, the write 0 operation is executed, and because the time for the write 0 operation is shorter, a time consumed in the first stage is shorter; in a second stage, the write 1 operation is executed, and because the write current of the write 1 operation is weaker, more write 1 operations may be concurrently executed in the second stage.
   In this way, the data is written to the storage unit of the storage medium in stages according to the content of the data, which can improve efficiency in writing data to the storage medium.
S420. After write operations are concurrently executed on n storage units in a first write cycle, count a quantity k of storage units in which writing succeeds among the n storage units in the first write cycle, where n is an integer greater than or equal to 2, and n is greater than k.
S430. Perform, in a second write cycle, write operations on n-k storage units in which writing is not successful.
S440. In the second write cycle, if the counted k is greater than or equal to 1, write operations on subsequent data whose data amount is m storage units may be started, where m is an integer greater than or equal to 1, and the second write cycle is a write cycle that is subsequent to the first write cycle and adjacent to the first write cycle.

Write operations are performed on the n-k storage units in which writing is not successful, which can ensure that writing to all storage units of the storage medium. succeeds.

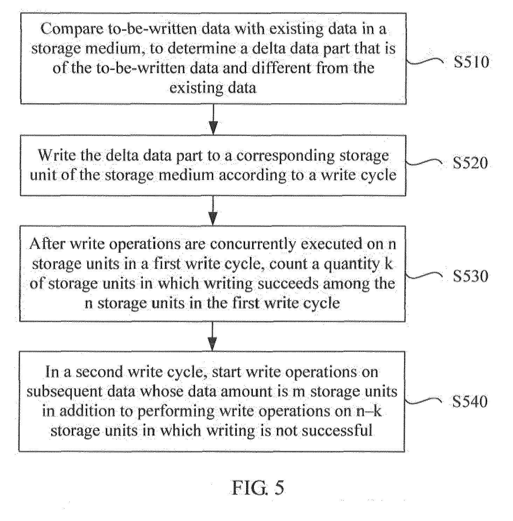

FIG 5 shows a flowchart of a method for writing data to a storage medium according to Embodiment 3 of the present invention. As shown in FIG. 5, the method for writing data to a storage medium includes:
S510. Compare to-be-written data with existing data in the storage medium, to determine a changed data part between the to-be-written data and the existing data.
   S520. Write the changed data part to a corresponding storage unit of the storage medium according to a write cycle.
S530. After write operations are concurrently executed on n storage units in a first write cycle, count a quantity k of storage units in which writing succeeds among the n storage units in the first write cycle, where n is an integer greater than or equal to 2, n is greater than k, and k is an integer greater than or equal to 1.
S540. In a second write cycle, start write operations on subsequent data whose data amount is m storage units in addition to performing write operations on n-k storage units in which writing is not successful, where m is an integer greater than or equal to 1, and the second write cycle is a write cycle that is subsequent to the first write cycle and adjacent to the first write cycle.

In this way, the data is compared with the existing data in the storage medium, to determine the changed data part between the to-be-written data and the existing data, and only the changed data part is written to the corresponding storage unit of the storage medium, which can improve efficiency in writing data to the storage medium.

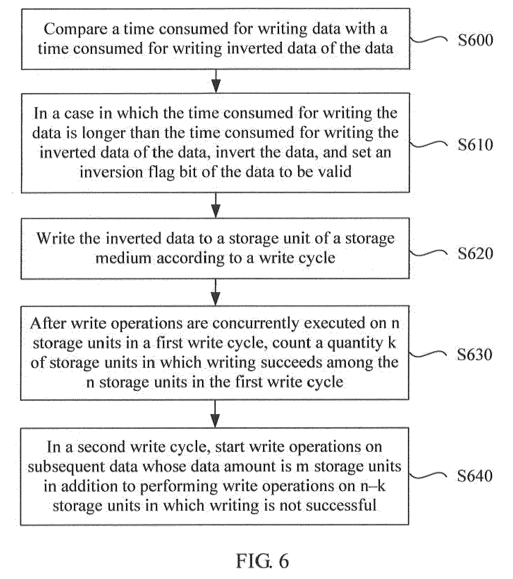

FIG. 6 shows a flowchart of a method for writing data to a storage medium according to Embodiment 4 of the present invention. As shown in FIG. 6, the method for writing data to a storage medium includes:
S600. Compare a time consumed for writing data with a time consumed for writing inverted data of the data.
S610. If the time consumed for writing the data is longer than the time consumed for writing the inverted data of the data, invert the data, and set an inversion flag bit of the data to be valid.
S620. Write the inverted data to a storage unit of a storage medium according to a write cycle.
S630. After write operations are concurrently executed on n storage units in a first write cycle, count a quantity k of storage units in which writing succeeds among the n storage units in the first write cycle, where n is an integer greater than or equal to 2, n is greater than k, and k is an integer greater than or equal to 1.
S640. In a second write cycle, start write operations on subsequent data whose data amount is m storage units in addition to performing write operations on n-k storage units in which writing is not successful, where m is an integer greater than or equal to 1, and the second write cycle is a write cycle that is subsequent to the first write cycle and adjacent to the first write cycle. In this way, the time consumed for writing the data is compared with the time consumed for writing the inverted data of the data; if the time consumed for writing the data is longer than the time consumed for writing the inverted data of the data, the data is inverted, the inversion flag bit of the data is set to be valid, and the inverted data is written to the storage unit of the storage medium according to the write cycle, which can improve efficiency in writing data to the storage medium.

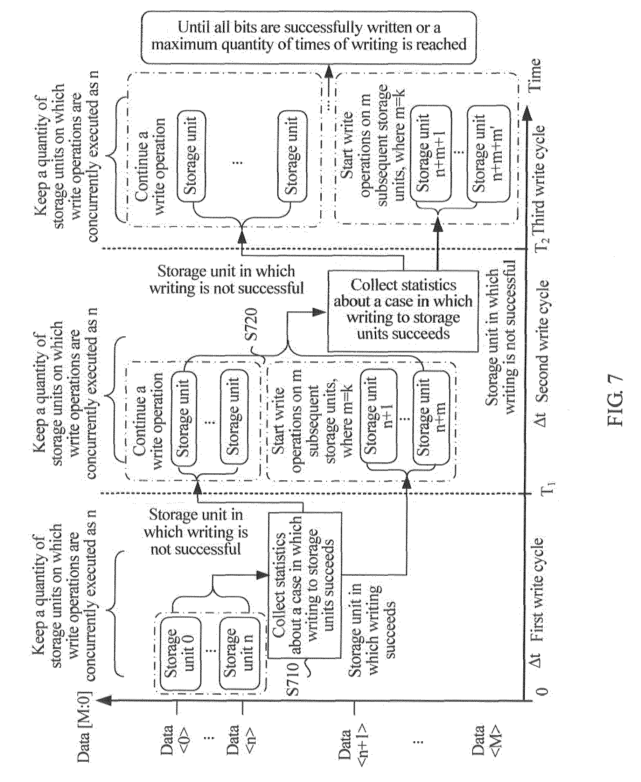

FIG. 7 shows a flowchart of a method for writing data to a storage medium according to Embodiment 5 of the present invention. As shown in FIG. 7, the method for writing data to a storage medium may include:
S710. Count storage units written successfully.
S720. If a result of the counting indicates that writing to k storage units succeeds in a first write cycle, start write operations on m subsequent storage units in a second write cycle, where m may be less than or equal to k. In FIG. 7, m=k is used as an example for description, and write operations may be concurrently executed on n storage units in each write cycle.

Specifically, in the first write cycle, data 0 to data n are correspondingly written to a storage unit 0 to a storage unit n, and the storage unit 0 to the storage unit n written successfully are counted. For a storage unit in which writing is not successful, a write operation continues in the second write cycle; for a storage unit in which writing succeeds, the quantity k of storage units in which writing succeeds are counted, and write operations are started on the m subsequent storage units (that is, a storage unit n+1 to a storage unit n+m) in the second write cycle.

It should be noted that additional numbers following the foregoing storage units are used to represent different storage units. For example, the storage unit n represents the n^{th} storage unit of the storage medium.

It is assumed that a maximum quantity of concurrent executions of the storage medium is N, where the maximum quantity N of concurrent executions represents a maximum quantity of storage units the storage medium allows write operations to be concurrently executed in each write cycle, and N is a positive integer. If write operations are concurrently executed on N storage units at the beginning of writing data to storage medium, starting, in the second write cycle, write operations on storage units in which writing succeeds in the first write cycle can ensure that data is written with maximum efficiency in an entire process of writing data to the storage medium.

In a possible implementation manner, m may be less than or equal to N-(n-k), where N is a maximum quantity of concurrent executions and represents in each write cycle, n-k is a quantity of storage units in which writing is not successful in the first write cycle, n is less than or equal to N, and k is less than or equal to N-(n-k).

If m is equal to N-(n-k), it can be ensured that data is written with maximum efficiency in an entire process of writing data to the storage medium.

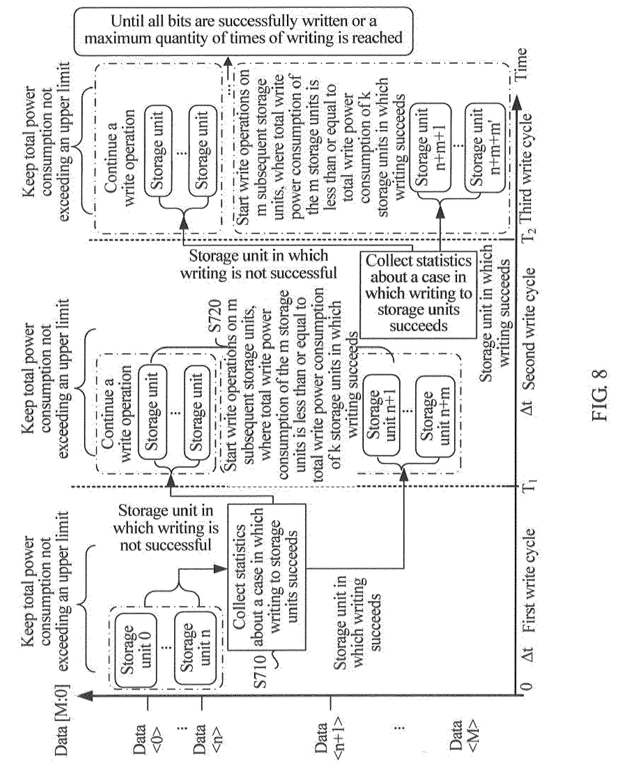

FIG. 8 shows a flowchart of a method for writing data to a storage medium according to Embodiment 6 of the present invention. As shown in FIG. 8, the method for writing data to a storage medium may include:
S810. Count storage units written successfully.
S820. If a result of the counting indicates that writing to k storage units succeeds in the first write cycle, start write operations on m subsequent storage units in a second write cycle, where total write power consumption of the write operations on data whose data amount is m storage units is less than or equal to total write power consumption of write operations on the k storage units in which writing succeeds in the first write cycle.

Specifically, in the first write cycle, data 0 to data n are correspondingly written to a storage unit 0 to a storage unit n, and the storage unit 0 to the storage unit n written successfully are counted. For a storage unit in which writing is not successful, a write operation continues in the second write cycle; for storage units in which writing succeeds, total write power consumption of the storage units is calculated, write operations are started on the m subsequent storage units (that is, a storage unit n+1 to a storage unit n+m) in the second cycle, and the total write power consumption of the write operations on the data whose data amount is m storage units is made less than or equal to the total write power consumption of the write operations on the k storage units in which writing succeeds in the first write cycle.

If it is ensured that total write power consumption of storage units in the write cycle is maximum write power consumption at the beginning of writing data to the storage medium, making the total write power consumption of the write operations on the data whose data amount is m storage units less than or equal to the total write power consumption of the write operations on the k storage units in which writing succeeds in the first write cycle can ensure that a write operation on each storage unit is smoothly completed in each write cycle.

The total write power consumption of the write operations on the data whose data amount is m storage units is made equal to the total write power consumption of the write operations on the k storage units in which writing succeeds in the first write cycle, which can ensure data is written with maximum efficiency in a process of writing data to the storage medium.

It should be noted that the foregoing write power consumption includes but is not limited to a current and a voltage. For example, the write power consumption is a current. It is assumed that a maximum write current allowed by the storage medium in each write cycle is I, and if a current of a write 0 operation is i, and a current of a write 1 operation is i', I/i 0s or I/i' 1s may be concurrently written to the storage medium in each write cycle.

The write 0 operation and the write 1 operation are used as an example. If a write current of the write 1 operation is less than a write current of the write 0 operation, if one write 0 operation is completed in a first write cycle, one write 0 operation or at least one write 1 operation may be started in a second write cycle; if one write 1 operation is completed in the first write cycle, one write 1 operation may be started in the second write cycle; if multiple write 0 operations are completed in the first write cycle, at least one write 0 or write 1 operation may be started in the second write cycle; if multiple write 1 operations are completed in the first write cycle, at least one write 1 operation may be started in the second write cycle, and at least one write 0 operation may be started providing that a write power consumption condition is met. Certainly, the write operations on the m subsequent storage units include but are not limited to the write 0 operation and the write 1 operation, and a case in which the write current of the write 0 operation is less than the write current of the write 1 operation is not excluded in the present invention.

For example, data is written to the storage medium in two stages, and it is assumed that a maximum of two 0s or four 1s may be concurrently written to the storage medium in each write cycle. If to-be-written data is 01011011, a quantity of times of write operations required for successful writing to a corresponding storage unit is shown in the following table:

| | | | | | | | | |
|---|---|---|---|---|---|---|---|---|
| **Storage unit** | 1 | 2 | 3 | 4 | 5 | 6 | 7 | 8 |
| **Bit value** | 0 | 1 | 0 | 1 | 1 | 0 | 1 | 1 |
| **Quantity of times** | 1 | 4 | 4 | 2 | 4 | 4 | 3 | 6 |

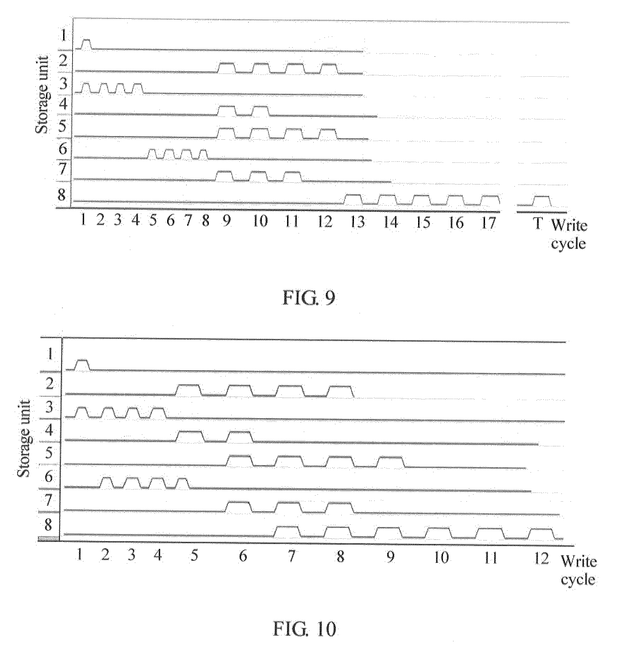

When data is written to the storage medium in two stages in a batch writing manner in the prior art, a sequence diagram of writing data in two stages in a batching writing manner is shown in FIG. 9, where the vertical axis represents numbers of different storage units, and the horizontal axis represents a cycle number. In one cycle, write 0 operations and write 1 operations may be divided into two stages for execution. If a time for the write 0 operation is shorter and a current required for the write 1 operation is weaker, all write 0 operations are executed in a first stage, and after all the write 0 operations are completed, the write 1 operations are started in a second stage. Certainly, a case in which a time for the write 1 operation is shorter and a current required for the write 0 operation is weaker is not excluded in the present invention, and in this case, all write 1 operations are executed in the first stage, and after all the write 1 operations are completed, the write 0 operations are started in the second stage.

When data is written to the storage medium in two stages according to the method provided in Embodiment 6, a sequence diagram of writing data in stages is shown in FIG. 10, where the vertical axis represents numbers of different storage units, and the horizontal axis represents a cycle number. In a first write cycle, write 0 operations are performed on a first storage unit and a third storage unit. Because data writing to the first storage unit can be completed when only one write operation is performed, when a second write cycle ends, writing to the first storage unit succeeds. In a third write cycle, a write 0 operation on a second storage unit continues, and a write 0 operation on a sixth storage unit is started. Because data wiring to both the second storage unit and the sixth storage unit can be completed only when four write operations are performed, when a fourth write cycle ends, the write 0 operation on the second storage unit is completed, and when a fifth write cycle ends, the write 0 operation on the sixth storage unit is completed. Because two 0s or four 1s can be concurrently written to the storage medium in each write cycle, to ensure that data is written with maximum write power consumption, in the fifth write cycle, write 1 operations are started on the second storage unit and a fourth storage unit on the basis of continuing the write 0 operation on the sixth storage unit. In a sixth write cycle, write 1 operations are started on a fifth storage unit and a seventh storage unit on the basis of continuing the write 1 operations on the second storage unit and the fourth storage unit.

It can be learned that, compared with a manner of writing data in batches, the present invention improves efficiency in writing data to a storage medium, and can ensure that data is written with maximum efficiency in an entire process of writing data to the storage medium.

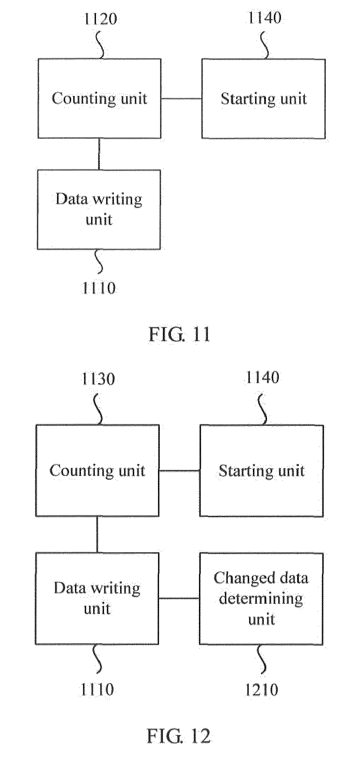

FIG. 11 shows a structural block diagram of an apparatus for writing data to a storage medium according to Embodiment 7 of the present invention, where the apparatus for writing data to a storage medium includes a data writing unit 1110, a counting unit 1120, a determining unit 1130, and a starting unit 1140.

The data writing unit 1110 is configured to write data to a storage unit of a storage medium according to a write cycle of the storage medium, where the storage unit is a read/write unit of the storage medium.

The counting unit 1120 is configured to count a quantity k of storage units in which writing succeeds among the n storage units in the first write cycle, where n is an integer greater than or equal to 2, n is greater than k, and k is an integer greater than or equal to 1.

The starting unit 1140 is connected to the counting unit 1120 and is configured to: in a second write cycle, enable the data writing unit to perform write operations on subsequent data whose data amount is m storage units in addition to performing write operations on n-k storage units in which writing is not successful, where m is an integer greater than or equal to 1, and the second write cycle is a write cycle that is subsequent to the first write cycle and adjacent to the first write cycle.

In a possible implementation manner, the data writing unit 1110 is further configured to write the data to the storage unit of the storage medium in stages according to content of the data.

In a possible implementation manner, m is less than or equal to k.

In a possible implementation manner, m is less than or equal to N-(n-k), N is a maximum quantity of concurrent executions, and represents a maximum quantity of storage units the storage medium allows write operations to be concurrently executed in each write cycle, n-k is a quantity of storage units in which writing is not successful in the first write cycle, n is less than or equal to N, and k is less than or equal to N-(n-k).

In a possible implementation manner, total write power consumption of the write operations on the data whose data amount is m storage units is less than or equal to total write power consumption of write operations on the k storage units in which writing succeeds in the first write cycle.

FIG. 12 shows a structural block diagram of an apparatus for writing data to a storage medium according to Embodiment 8 of the present invention. Structures in FIG. 7 that have same reference numerals as those in FIG. 11 have same functions. For brevity, detailed descriptions of these structures are omitted.

As shown in FIG. 12, a main difference between the apparatus for writing data to a storage medium shown in FIG. 12 and the apparatus for writing data to a storage medium shown in FIG. 11 lies in that the apparatus shown in FIG. 12 further includes: a changed data determining unit 1210, configured to compare the data with existing data in the storage medium, to determine a changed data part that between the to-be-written data and the existing data.

The data writing unit 1110 is connected to the changed data determining unit 1210 and is configured to write the changed data part to a corresponding storage unit of the storage medium according to a write cycle.

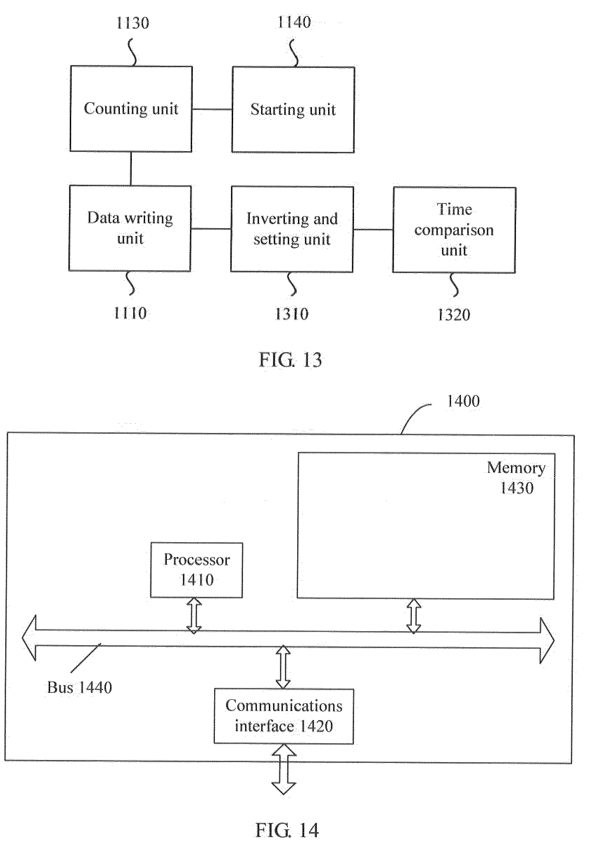

FIG. 13 shows a structural block diagram of an apparatus for writing data to a storage medium according to Embodiment 9 of the present invention. Structures in FIG. 13 that have same reference numerals as those in FIG. 11 have same functions. For brevity, detailed descriptions of these structures are omitted.

As shown in FIG. 13, a main difference between the apparatus for writing data to a storage medium shown in FIG 13 and the apparatus for writing data to a storage medium shown in FIG 11 lies in that the apparatus shown in FIG. 13 further includes: a time comparison unit 1320, configured to compare a time consumed for writing the data with a time consumed for writing inverted data of the data; and
an inverting and setting unit 1310, connected to the time comparison unit 1320 and is configured to: if the time consumed for writing the data is longer than the time consumed for writing the inverted data, invert the data, and set an inversion flag bit of the data to be valid.

The data writing unit 1110 is connected to the inverting and setting unit 1310 and is configured to write the inverted data to a corresponding storage unit of the storage medium according to a write cycle.

FIG. 14 shows a structural block diagram of an apparatus for writing data to a storage medium according to Embodiment 10 of the present invention. The apparatus 1400 for writing data to a storage medium may be a host server with a computing capability, a personal computer PC, a portable computer, a terminal, or the like. Specific implementation of a computing node is not limited in a specific embodiment of the present invention.

The apparatus 1400 for writing data to a storage medium includes a processor (processor) 1410, a communications interface (Communications Interface) 1420, a memory (memory) 1430, and a bus 1440, where the processor 1410, the communications interface 1420, and the memory 1430 implement mutual communication by using the bus 1440.

The communications interface 1420 is configured to communicate with a network device, where the network device includes a virtual machine management center, a shared memory, and the like.

The processor 1410 is configured to execute a program. The processor 1410 may be a central processing unit CPU, an application-specific integrated circuit ASIC (Application Specific Integrated Circuit), or one or more integrated circuits configured to implement this embodiment of the present invention.

The memory 1430 is configured to store a file. The memory 1430 may include a high-speed RAM memory, and may further include a non-volatile memory (non-volatile memory), for example, at least one magnetic disk memory. The memory 1430 may also be a memory array. The memory 1430 may also be divided into blocks, and the blocks may be combined into a virtual volume according to a particular rule.

In a possible implementation manner, the foregoing program stored in the memory 1430 may be program code including a computer operation instruction. By executing the program, the processor 1410 may be specifically configured to:
write data to a storage unit of a storage medium according to a write cycle of the storage medium, where the storage unit is a read/write unit of the storage medium;
after write operations are concurrently executed on n storage units in a first write cycle, count a quantity k of storage units in which writing succeeds among the n storage units in the first write cycle, where n is an integer greater than or equal to 2, n is greater than k, and k is an integer greater than or equal to 1; and
in a second write cycle, start write operations on subsequent data whose data amount is m storage units in addition to performing write operations on n-k storage units in which writing is not successful, where m is an integer greater than or equal to 1, and the second write cycle is a write cycle that is subsequent to the first write cycle and adjacent to the first write cycle.

In a possible implementation manner, m is less than or equal to k.

In a possible implementation manner, m is less than or equal to N-(n-k), N is a maximum quantity of concurrent executions, and represents a maximum quantity of storage units the storage medium allows write operations to be concurrently executed in each write cycle, n-k is a quantity of storage units in which writing is not successful in the first write cycle, n is less than or equal to N, and k is less than or equal to N-(n-k).

In a possible implementation manner, total write power consumption of the write operations on the data whose data amount is m storage units is less than or equal to total write power consumption of write operations on the k storage units in which writing succeeds in the first write cycle.

A person of ordinary skill in the art may be aware that, exemplary units and algorithm steps in the embodiments described in this specification may be implemented by electronic hardware or a combination of computer software and electronic hardware. Whether the functions are implemented by hardware or software depends on particular applications and design constraint conditions of the technical solutions. A person skilled in the art may select different methods to implement the described functions for a particular application, but it should not be considered that the implementation goes beyond the scope of the present invention.

If the functions are implemented in a form of computer software and sold or used as an independent product, it can be deemed to some extent that all or some of the technical solutions of the present invention (for example, the part contributing to the prior art) are implemented in a form of a computer software product. The computer software product is generally stored in a computer-readable non-volatile storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art in the technical scope disclosed in the present invention shall fall in the protection scope of the present invention. Therefore, the protection scope of the present invention shall be subject to the protection scope of the claims.

## Claims

1. A method for writing data to a storage medium, comprising:
writing data to a storage unit of a storage medium according to a write cycle of the storage medium, wherein the storage unit is a read/write unit of the storage medium;
after write operations are concurrently executed on n storage units in a first write cycle, counting a quantity k of storage units in which writing succeeds among the n storage units in the first write cycle, wherein n is an integer greater than or equal to 2, n is greater than k, and k is an integer greater than or equal to 1; and
starting, in a second write cycle, write operations on subsequent data whose data amount is m storage units in addition to perform write operations on n-k storage units in which writing is not successful, wherein m is an integer greater than or equal to 1, and the second write cycle is a write cycle that is subsequent to the first write cycle and adjacent to the first write cycle.

2. The method according to claim 1, wherein m is less than or equal to k.

3. The method according to claim 1, wherein m is less than or equal to N-(n-k), N is a maximum quantity of concurrent executions, and represents a maximum quantity of storage units on which the storage medium allows write operations to be concurrently executed in each write cycle, n-k is a quantity of storage units in which writing is not successful in the first write cycle, n is less than or equal to N, and k is less than or equal to N-(n-k).

4. The method according to any one of claims 1 to 3, wherein total write power consumption of the write operations on the data whose data amount is m storage units is less than or equal to total write power consumption of write operations on the k storage units in which writing succeeds in the first write cycle.

5. An apparatus for writing data to a storage medium, comprising:
a data writing unit, configured to write data to a storage unit of a storage medium according to a write cycle of the storage medium, wherein the storage unit is a read/write unit of the storage medium;
a counting unit, configured to count a quantity k of storage units in which writing succeeds among the n storage units in the first write cycle, wherein n is an integer greater than or equal to 2, n is greater than k, and k is an integer greater than or equal to 1; and
a starting unit, connected to the counting unit and configured to, in a second write cycle, enable the data writing unit to perform write operations on subsequent data whose data amount is m storage units in addition to performing write operations on n-k storage units in which writing is not successful, wherein m is an integer greater than or equal to 1, and the second write cycle is a write cycle that is subsequent to the first write cycle and adjacent to the first write cycle.

6. The apparatus according to claim 5, wherein m is less than or equal to k.

7. The apparatus according to claim 5, wherein m is less than or equal to N-(n-k), N is a maximum quantity of concurrent executions, and represents a maximum quantity of storage units the storage medium allows write operations to be concurrently executed in each write cycle, n-k is a quantity of storage units in which writing is not successful in the first write cycle, n is less than or equal to N, and k is less than or equal to N-(n-k).

8. The apparatus according to any one of claims 5 to 7, wherein total write power consumption of the write operations on the data whose data amount is m storage units is less than or equal to total write power consumption of write operations on the k storage units in which writing succeeds in the first write cycle.
